# EUROPEAN PATENT SPECIFICATION

(11) **EP 1 972 522 B1**
(45) Date of publication and mention of the grant of the patent: **18.07.2012**
(21) Application number: 08380022.7
(22) Date of filing: 30.01.2008
(51) Int. Cl.: B62B 7/08

(54) **A foldable pushchair for babies and small children**
Faltbarer Kinderwagen für Babys und Kleinkinder
Poussette de bébés et petits enfants pliable

(30) Priority: 21.03.2007 ES 200700618 U
(43) Date of publication of application: 24.09.2008
(73) Proprietor: Jané S.A., 08184 Palau Solita I Plegamans (ES)
(72) Inventor: Jane Santamaria, Manuel, 08184 Palau Solita I Plegamans Barcelona (ES)
(74) Representative: Pastells Teixido, Manuel

(56) References cited:
- EP-A1- 1 864 884
- WO-A2-2005/074507
- US-A1- 2002 163 163
- US-B1- 6 752 405

## Description

### BACKGROUND OF THE INVENTION

This pushchair is of the type having the two rear legs fitted with the corresponding wheels, in the folded arrangement of the pushchair the wheels with their support being arranged in the prolongation of the legs.

This make-up is a characterising feature of the so-called umbrella type pushchairs wherein each of the rear legs is articulately linked at its upper end to a respective arm forming the handlebar and ending in a respective handle, each of the front legs being articulately linked to the lower end of the respective one of said arms, these legs being articulately linked to the rear ones by means of two crossed cross members.

These pushchairs can be folded at the middle portion of their sides, these latter being brought closer together when carrying out the folding of the pushchair, this latter nevertheless once having been folded having an appreciable length since the rear wheels have thereby been spaced away from the front ones.

In this type of pushchairs some modifications have been carried out with a view to reduce their length when in the folded arrangement.

These modifications generally consist in articulately linking the supports of the rear wheels to the corresponding legs in order to have said supports folded with respect to the leg when carrying out the folding of the pushchair.

Although these are not pushchairs of the type this patent refers to, patent nos. US 2002/163163 and WO 2005/074507 are cited as the prior art.

US 2002/163163 discloses a baby pushchair which consists of a rigid frame having front legs and the handlebar to which the support of the rear legs is joint, when the pushchair is folded, the rear wheels are set folded under the frame in a horizontal position.

Patent WO 2005/074507 refers to a luggage device which consists of the structure of a foldable pushchair for babies, which shows its retracted wheels with a substantially upright movement.

EP 1 864 884 A1 discloses a foldable pushchair according to the preamble of claim 1.

### SUMMARY OF THE INVENTION

This invention has as its object a foldable pushchair for babies and small children allowing to improve the folding of the pushchair thereby having it arranged in a more compact folded arrangement because of obtaining a greater reduction of its length.

For such a purpose a characterising feature lies in the fact that each of the rear wheel supports has a second pin-jointed connection below its pin-jointed connection linking it to the corresponding leg, this allowing to increase the degree of folding of the actual support when folding the pushchair.

The wheel support has been provided with a stop piece being such as to stabilise the position of the support when the pushchair is arranged in the unfolded arrangement.

The rear wheel supports form two lengths being linked to each other in a pin-jointed connection and are articulately linked to component members of the chassis of the pushchair which when carrying out the folding of this latter pull the two lengths of said supports in order to thus bring about the folding of the rear wheels.

These and other characterising features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Fig. 1 shows in a simplified side elevation the chassis of the foldable pushchair for babies and small children of a conventional type in its folded arrangement;
Fig. 2 depicts in a side elevation the position of the rear wheel support with the pushchair in a folded arrangement when said support is articulately linked to the corresponding leg; and
Figs. 3, 4 and 5 respectively correspond to perspective views respectively showing: the make-up of the wheel support with the pushchair in the unfolded arrangement; and with the pushchair in the process of being folded; and the arrangement of the wheel in the fully folded arrangement.

### DETAILED DESCRIPTION

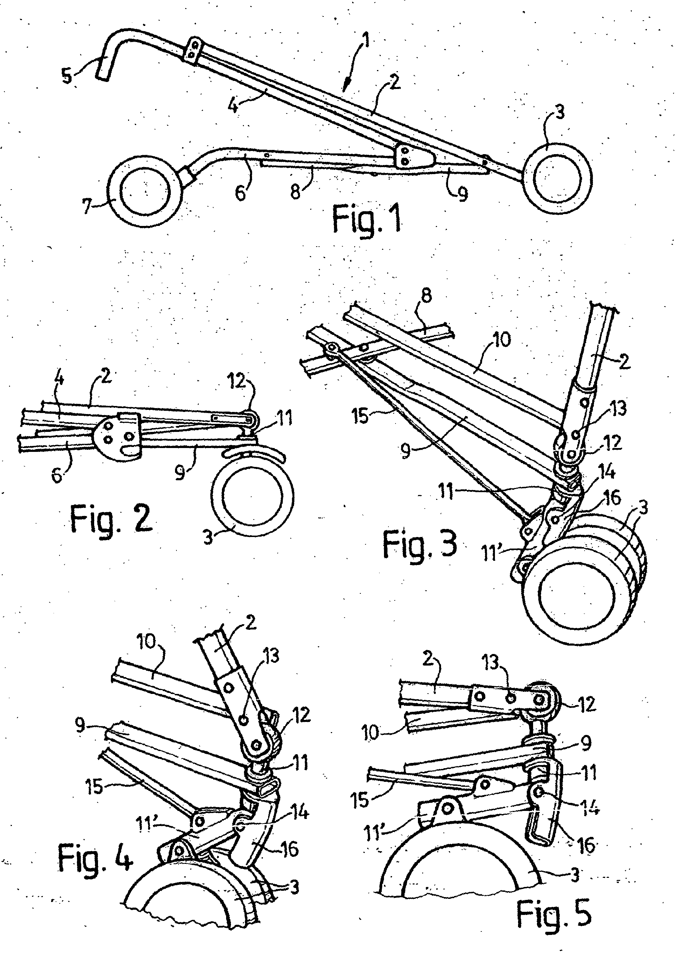

According to the drawings Fig. 1 shows the chassis (1) of a conventional umbrella type pushchair in the folded arrangement, said pushchair comprising two rear legs (2) having the wheels (3) inferiorly fitted to them and being upperly and articulately linked to the arms (4) forming the handlebars and ending in respective handles (5). The arms (4) are inferiorly and articulately fitted to the front legs (6) comprising the corresponding wheels (7). The front legs (6) and the rear legs (2) are articulately connected to each other by means of two crossed cross members (8) and (9), and between the front leg and the rear leg at each side a respective lateral side member (10) is fitted as a support for the seat.

In this pushchair the support (11) of the wheels (3) is fitted to the lower end of the rear legs (2) by means of a pin-jointed connection (12), the corresponding cross member (9) being articulately linked to the lower end of said support (11), the rear end of the corresponding side member (10) being fitted to the lower end (13) of the legs (2).

The main feature of the present invention lies in the fact that the rear wheel supports (11) have a second intermediary pin-jointed connection (14) and thus form two lengths being articulately linked to each other and articulately connected to component members of the chassis of the pushchair which when being folded exert a pulling action on the two lengths of said supports in order to thus bring about the folding of the rear wheels.

The rear wheel supports (11) are articulately linked at their lower length (11') to joints of the cross members (8 and 9) by means of respective connecting rods (15).

Each of these rear wheel supports (11) has been provided with a respective stop piece (16) being such as to stabilise the position of the support when the pushchair is arranged in the unfolded arrangement (Fig. 3).

In the folding of the pushchair the two crossed cross members (8 and 9) exert at their rear end a pulling action on the upper length of the supports (11), and through the connecting rods (15) they exert a pulling action on the lower length (11') of said supports. Said lengths (11') are thereby arranged in a folded arrangement underneath the chassis, in such a way that the rear wheels (3) do not project beyond the end of the folded chassis (Fig. 5).

For pulling the supports (11) when folding the pushchair other components of the pushchair can be used, such as for example lateral side members articulately linking the support of each side to the corresponding front wheel.

## Claims

1. A foldable pushchair for babies and small children which when folded has its sides being brought closer together and the rear wheels (3) spaced away with respect to the front wheels (7) the support (11) of the rear wheels (3) having a first pin-jointed connection (12) allowing to fold it with respect to the corresponding leg (2); **characterised in that** each of the supports (11) of the rear wheels (3) has a second pin-jointed connection (14) below its first pin-jointed connection (12) linking it to the corresponding leg (2), this allowing to increase the
degree of lengthwise folding of the actual support (11) when folding the pushchair.

2. A foldable pushchair for babies and small children, as per claim 1, **characterised in that** the supports (11) of the rear wheels (3) form two lengths (11, 11') being linked to each other in a pin-jointed connection and are articulately linked to component members (8, 9, 15) of the chassis of the pushchair which when carrying out the folding of this latter pull the two lengths (11, 11') of said supports (11) in order to thus bring about the fording of the rear wheels (3).

3. A foldable pushchair for babies and small children, as per claim 1, **characterised in that** the support (11) of the wheels (3) has been provided with a stop piece (16) being such as to stabilise the position of the support when the pushchair is arranged in the unfolded arrangement.

## Patentansprüche

1. Zusammenklappbarer Buggy für Säuglinge und Kleinkinder, bei dem im zusammengeklappten Zustand die Seitenteile näher zusammengeführt werden und die Hinterräder (3) zu den Vorderrädern (7) beabstandet sind, wobei die Halterung (11) der Hinterräder (3) eine erste gelenkige Bolzenverbindung (12) aufweist, die das Zusammenklappen in Bezug auf den entsprechenden Schenkel (2) ermöglicht, **dadurch gekennzeichnet, dass** jede der Halterungen (11) der Hinterräder (3) eine zweite gelenkige Bolzenverbindung (14) unterhalb der ersten gelenkigen Bolzenverbindung (12) aufweist, die mit dem entsprechenden Schenkel (2) verbunden ist, wodurch beim Zusammenklappen des Buggys der Grad der Längsklappung der aktuellen Halterung (11) erhöht wird.

2. Zusammenklappbarer Buggy für Säuglinge und Kleinkinder nach Anspruch 1, **dadurch gekennzeichnet, dass** die Halterungen (11) der Hinterräder (3) zwei Längen (11, 11') bilden, die mittels einer gelenkigen Bolzenverbindung miteinander verbunden sind und mit den Komponenten (8, 9, 15) des Rahmens des Buggys gelenkig verbunden sind, welche bei dessen Zusammenklappen die beiden Längen (11, 11') der Halterungen (11) zusammenziehen, um den Klappvorgang der Hinterräder (3) zu bewirken.

3. Zusammenklappbarer Buggy für Säuglinge und Kleinkinder nach Anspruch 1, **dadurch gekennzeichnet, dass** die Halterung (11) der Räder (3) mit einem Anschlagstück (16) versehen ist, das dazu geeignet ist, die Position der Halterung zu stabilisieren, wenn sich der Buggy im ausgeklappten Zustand befindet.

## Revendications

1. Une poussette pliante pour bébés et petits enfants qui, une fois pliée, a ses latéraux qui se rapprochent et les roues arrière (3) sont espacées par rapport au roues avant (7), le support (11) des roues arrière (3) ayant une première union articulée (12) permettant de les plier par rapport à la béquille correspondante (2), **caractérisée en ce que** chacun des supports (11) des roues arrière (3) présente une seconde union articulée (14) sous la première union articulée (12) la reliant à la béquille correspondante (2), ce qui permet d'augmenter le degré du pliage longitudinal du support réel (11) en pliant la poussette.

2. Une poussette pliante pour bébés et petits enfants, conformément à la revendication 1, **caractérisée en ce que** les supports (11) des roues arrière (3) forment deux tronçons (11, 11') qui sont reliés l'un à l'autre par une union articulée et sont reliés par une articulation à des composants (8, 9, 15) du châssis de la poussette qui, en réalisant le pliage de celle-ci, tirent ensuite les deux tronçons (11, 11') desdits supports (11) afin de permettre le pliage des roues arrière (13).

3. Une poussette pliante pour bébés et petits enfants, conformément à la revendication 1, **caractérisée en ce que** le support (11) des roues (3) a été muni d'une pièce de butée (16) servant à stabiliser la position du support quand la poussette est dans une position dépliée.
